# EUROPEAN PATENT APPLICATION

(11) **EP 2 445 193 A2**
(43) Date of publication of application: **25.04.2012**
(21) Application number: 11008443.1
(22) Date of filing: 20.10.2011
(51) Int. Cl.: H04N 5/232

(54) **Image capture methods and systems**

(30) Priority: 20.10.2010 TW 99135709
(71) Applicant: HTC Corporation, Taoyuan County 330 (TW)
(72) Inventor: Ip, Shu-Ching, Taoyuan City Taoyuan County 330 (TW); Ho, Ming-Fong, Taoyuan City Taoyuan County 330 (TW); Chu, Lu-Chung, Taoyuan City Taoyuan County 330 (TW)
(74) Representative: Klang, Alexander H.

(57) **Abstract**

Image capture methods and systems are provided. First, at least one preview image is captured via an image capture unit of an electronic device. It is determined whether an image capturing status is stable or not according to the preview image. When the image capturing status is stable, the electronic device is enabled to perform a photography process to obtain an image via the image capture unit.

## Description

### CROSS REFERENCE TO RELATED APPLICATIONS

This Application claims priority of Taiwan Patent Application No. 099135709, filed on October 20, 2010, the entirety of which is incorporated by reference herein.

### BACKGROUND OF THE INVENTION

### Field of the Invention

The disclosure relates generally to image capture methods and systems, and, more particularly to methods and systems that determine whether to automatically perform a photography process according to an image capturing status which is determined based on at least one preview image and/or a vibration status of an electronic device.

### Description of the Related Art

Recently, portable devices, such as handheld devices, have become more and more technically advanced and multifunctional. For example, a handheld device may provide image capturing (picture-taking) capabilities operating like a digital camera, and have built-in self-timing mechanisms. A self-timer is a device on a camera that, when enabled, provides users with a time delay, such as ten seconds, between the pressing of the camera button and the image being captured. One reason for using a self-timer is so that the picture takers can be included in the image. Additionally, self-timers can allow vibrations, which may cause image blur, to dissipate before the image is captured.

However, conventional self-timing mechanisms have some noticeable drawbacks. After pressing the camera button, picture takers are allowed a fixed time, such as ten seconds, to position and compose themselves before an image is captured. Meanwhile, if repeated shots are necessary, another ten seconds will be required for the next image to be captured. The burdensome processes of waiting and repeated shots, may sometimes result in a poorer image outcome by the image subjects, as displeasure to the process is revealed on their faces.

Thus, there is a need for image capturing mechanisms that permit picture takers to position themselves at their own pace, and ensure correctness and stability of the captured image.

### BRIEF SUMMARY OF THE INVENTION

Image capture methods and systems are provided.

In an embodiment of an image capture method, at least one preview image is captured via an image capture unit of an electronic device. It is determined whether an image capturing status is stable or not according to the preview image. When the image capturing status is stable, the electronic device is enabled to perform a photography process to obtain an image via the image capture unit.

An embodiment of an image capture system includes an image capture unit and a processing unit. The image capture unit captures at least one preview image. The processing unit determines whether an image capturing status is stable or not according to the preview image. When the image capturing status is stable, the processing unit enables the image capture unit to perform a photography process, thus to obtain an image.

In an embodiment of an image capture method, it is determined whether an electronic device is stable or not via at least one sensor of the electronic device. When the electronic device is stable, the electronic device is enabled to perform a photography process to obtain an image via an image capture unit.

An embodiment of an image capture system includes at least one sensor, an image capture unit and a processing unit. The processing unit determines whether an electronic device is stable or not via the sensor. When the electronic device is stable, the processing unit enables the image capture unit to perform a photography process, thus to obtain an image.

In some embodiments, an input corresponding to a specific number can be received via an interface. After the preview image is obtained, it is determined whether the number of objects presented in the preview image equals to the specific number. When the number of the objects presented in the preview image equals to the specific number, it is determined that the image capturing status is stable.

In some embodiments, it is determined whether the position of an object in a first preview image and the position of the same object in a second preview image are the same. When the position of the object in the first preview image and the position of the same object in the second preview image are the same, it is determined that the image capturing status is stable.

In some embodiments, an input corresponding to a specific zone can be received via an interface. After the preview image is obtained, it is determined whether at least one object is presented in the specific zone. When at least one object is presented in the specific zone, it is determined that the image capturing status is stable.

Image capture methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of an image capture system of the invention;

Fig. 2 is a flowchart of an embodiment of an image capture method of the invention;

Fig. 3 is a flowchart of an embodiment of a method for setting a focus point of the invention;

Fig. 4 is a flowchart of an embodiment of a method for determining whether an image capture status is stable or not according to at least one preview image of the invention;

Fig. 5 is a flowchart of another embodiment of a method for determining whether an image capture status is stable or not according to at least one preview image of the invention;

Fig. 6 is a flowchart of another embodiment of a method for determining whether an image capture status is stable or not according to at least one preview image of the invention;

Fig. 7 is a schematic diagram illustrating another embodiment of an image capture system of the invention; and

Fig. 8 is a flowchart of another embodiment of an image capture method of the invention.

### DETAILED DESCRIPTION OF THE INVENTION

Image capture methods and systems are provided.

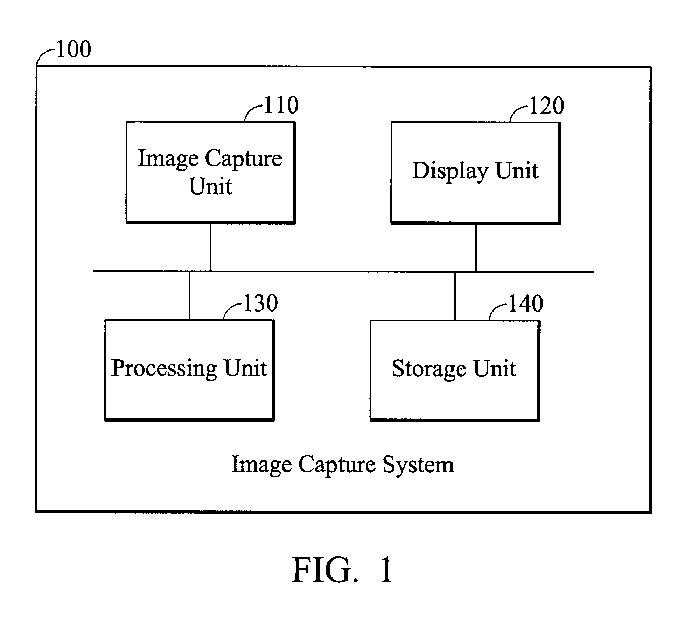

Fig. 1 is a schematic diagram illustrating an embodiment of an image capture system of the invention. The image capture system 100 can be used in an electronic device having image capture capability, such as a digital camera, or a picture-taking handheld device such as a mobile phone, a smart phone, a PDA (Personal Digital Assistant), and a GPS (Global Positioning System).

The image capture system 100 comprises an image capture unit 110, a display unit 120, a processing unit 130, and a storage unit 140. The image capture unit 110 may be a CCD (Charge Coupled Device) or a CMOS (Complementary Metal-Oxide Semiconductor), placed at the imaging position for objects inside the electronic device. The display unit 120 can display related figures and interfaces, and related data, such as the preview images continuously captured by the image capture unit 110, and the image captured by the image capture unit 110 during a photography process. It is noted that, the preview image is not actually stored in the storage unit 140. It is understood that, in some embodiments, the display unit 120 may be a screen integrated with a touch-sensitive device (not shown). The touch-sensitive device has a touch-sensitive surface comprising sensors in at least one dimension to detect contact and movement of an input tool, such as a stylus or finger on the touch-sensitive surface. That is, users can directly input related data via the display unit 120. The processing unit 130 can control related components of the image capture system 100, process the preview images continuously captured by the image capture unit 110, and/or the image captured by the image capture unit 110 during the photography process, and perform the image capture methods of the invention, which will be discussed further in the following paragraphs. It is noted that, the image capture system 100 can further comprise a focus unit (not shown in Fig. 1). The processing unit 130 can control the focus unit to perform a focus process for at least one object during a photography process. The image data captured by the image capture unit 110 can be permanently or temporarily stored in the storage unit 140. The storage unit 140 may be a built-in memory, or an external memory card of the image capture system 100.

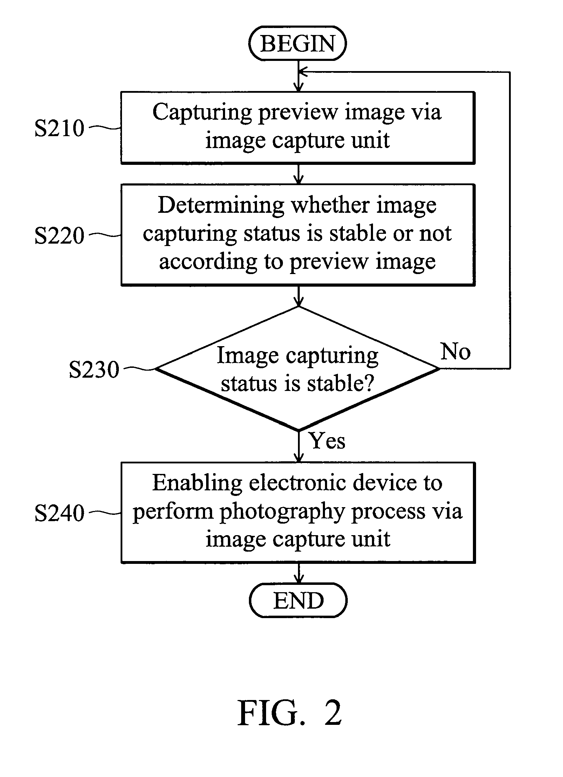

Fig. 2 is a flowchart of an embodiment of an image capture method of the invention. The image capture method can be used in an electronic device having image capture capability, such as a digital camera, or a picture-taking handheld device such as a mobile phone, a smart phone, a PDA, and a GPS.

In step S210, at least one preview image is captured via the image capture unit of the electronic device. After the preview image is obtained, in step S220, it is determined whether an image capturing status is stable or not according to the preview image. The image capturing status can be used to determine whether an image captured in a photography process is correct and without any vibration. When the image capturing status is not stable (No in step S230), the procedure returns to step S210, and the image capture unit continues to capture another preview image. When the image capturing status is stable (Yes in step S230), in step S240, the electronic device is enabled to perform a photography process to obtain an image via the image capture unit. It is understood that, in some embodiments, the electronic device can have at least one sensor to detect whether the electronic device is moved or not. It is determined whether the electronic device is stable or not via the sensor. In some embodiments, when the electronic device is stable, the determination in step S220 is performed. In some embodiments, when the electronic device is stable, the photography process in step S240 is performed.

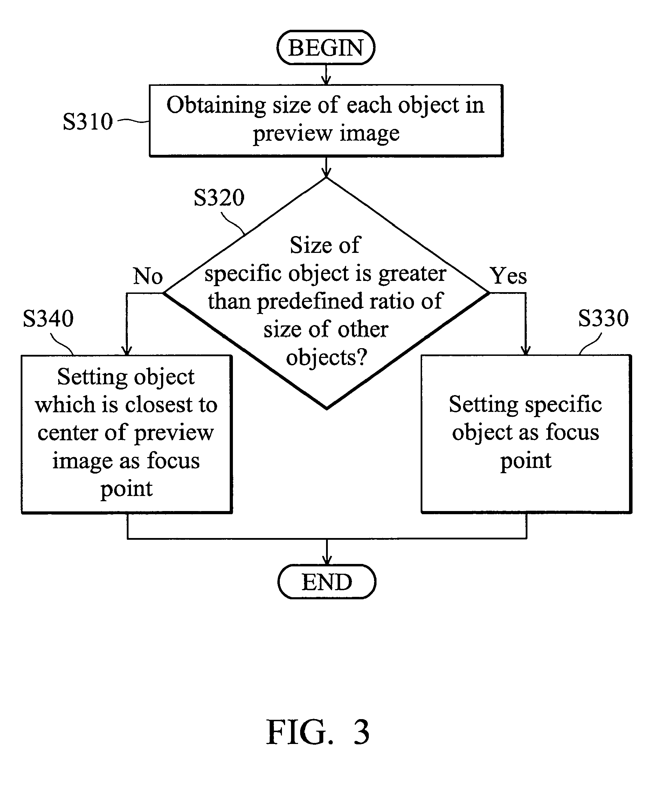

It is understood that, in some embodiments, a predefined time, such as two or ten seconds can be delayed before the performance of the photography process. After the predefined time, the electronic device performs the photography process via the image capture unit. It is noted that, in some embodiments, the photography process may comprise an auto-focusing process, thus to locate at least one object in the preview image, and set at least one focus point. The photography process can be performed based on the focus point. It is understood that, the setting of the focus point may vary according to different requirements and applications. Fig. 3 is a flowchart of an embodiment of a method for setting a focus point of the invention. In step S310, at least one object, such as a face in the preview image is detected, and the size of each object in the preview image is obtained. In step S320, it is determined whether the size of a specific object is greater than a predefined ratio, such as 1.5 times that of the size of the other objects. When the size of the specific object is greater than the predefined ratio of the size of the other objects (Yes in step S320), in step S330, the specific object is set as the focus point. When no specific object has a size greater than the predefined ratio of the size of the other objects in the preview image, that is, the size of each object is similar (No in step S320), in step S340, the object which is closest to the center of the preview image is set as the focus point.

It is understood that, in addition to the focus process, related exposure and compensation calculations are also required during the photography process. Any focus, exposure and compensation processes can be used in the embodiments of the invention.

It is noted that, as described, the preview image can be used to determine whether the image capturing status is stable or not, and the image capturing status can be used to determine whether an image captured in a photography process is correct and without any vibration.

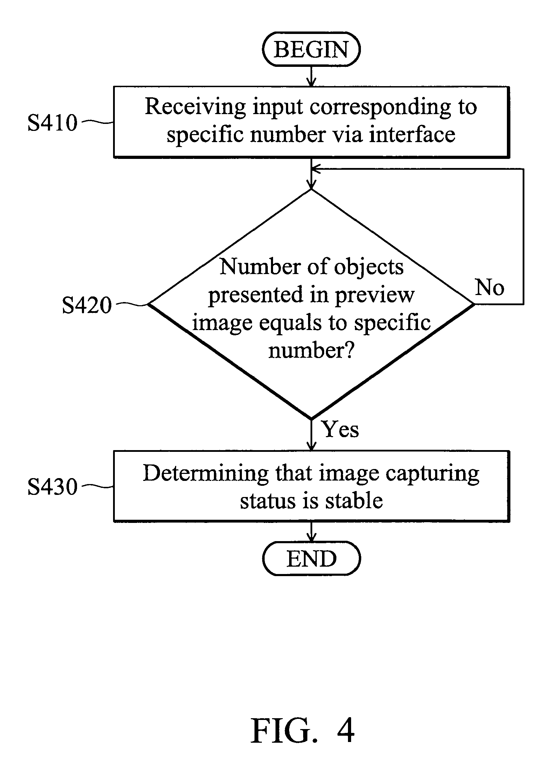

Fig. 4 is a flowchart of an embodiment of a method for determining whether an image capture status is stable or not according to at least one preview image of the invention. In step S410, an input corresponding to a specific number can be received via an interface. It is noted that, in some embodiments, the display unit can display the interface, and users can input the specific number via the display unit. The specific number is a number of objects which the user expects to be included in the captured image. In step S420, at least one object, such as a face in the preview image is detected, and it is determined whether the number of the detected objects in the preview image equals to the specific number. When the number of the objects presented in the preview image equals to the specific number (No in step S420), the procedure remains at step S420. When the number of the objects presented in the preview image equals to the specific number (Yes in step S420), in step S430, it is determined that the image capturing status is stable. That is, the photography process can be performed.

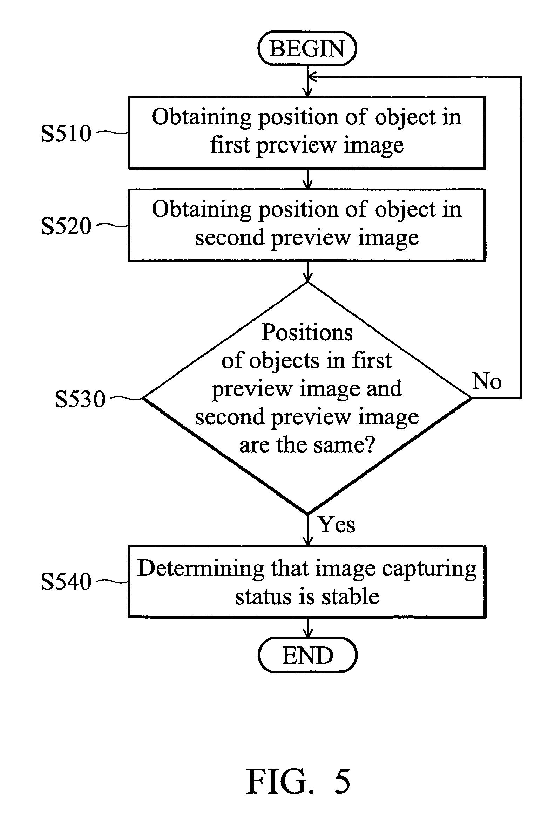

Fig. 5 is a flowchart of another embodiment of a method for determining whether an image capture status is stable or not according to at least one preview image of the invention. In step S510, at least one object, such as a face in a first preview image is detected, and the position of the object in the first preview image is obtained. In step S520, at least one object in a second preview image is detected, and the position of the object in the second preview image is obtained. It is understood that, the first preview image and the second preview image are successively captured by the image capture unit. In step S530, it is determined whether the position of the object in the first preview image and the position of the object in the second preview image are the same. It is noted that, in some embodiments, when the position of the object in the first preview image and the position of the object in the second preview image are different, and the difference therebetween is smaller than a predefined tolerance, it is also determined that the position of the object in the first preview image and the position of the object in the second preview image are the same. When the positions of the objects respectively in the first preview image and the second preview image are not the same (No in step S530), the procedure returns to step S510. When the positions of the objects respectively in the first preview image and the second preview image are the same (Yes in step S530), it is determined that the image capturing status is stable. That is, the photography process can be performed.

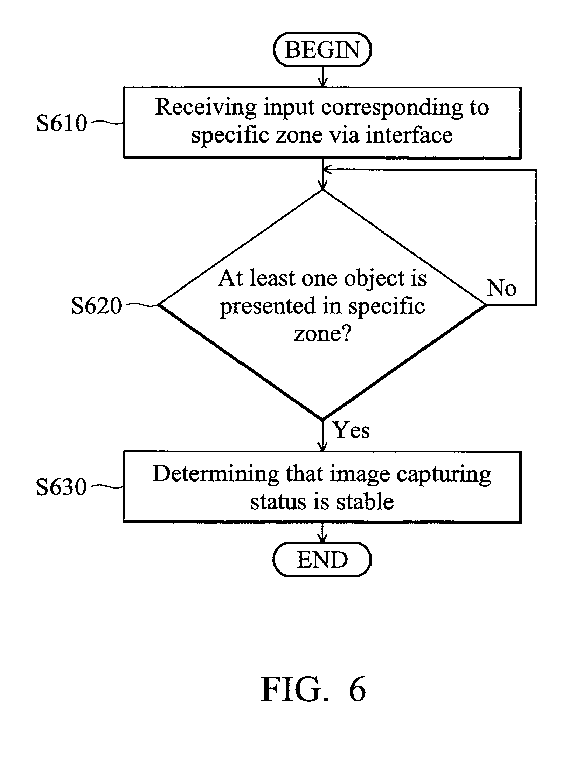

Fig. 6 is a flowchart of another embodiment of a method for determining whether an image capture status is stable or not according to at least one preview image of the invention. In step S610, an input corresponding to a specific zone is received via an interface. It is noted that, in some embodiments, the display unit can display the interface, and users can define the specific zone via the display unit. The specific zone is a zone where the user expects to be presented in the captured image. In step S620, at least one object, such as a face in the preview image is detected, and it is determined whether at least one object is presented in the specific zone. If no object is presented in the specific zone (No in step S620), the procedure remains at step S620. When at least one object is presented in the specific zone (Yes in step S620), it is determined that the image capturing status is stable. That is, the photography process can be performed.

It is understood that, in some embodiments, the embodiments of Figs. 4 and 5 can be integrated. That is, when the number of the objects, such as faces presented in the specific zone equals to the specific number, it is determined that the image capturing status is stable, and the photography process can be performed. It is noted that, the above methods for determining whether the image capture status is stable or not are only examples of the present application, and the present invention is not limited thereto. Any method for determining whether the image capture status is stable or not based on at least one preview image can be applied in the present invention.

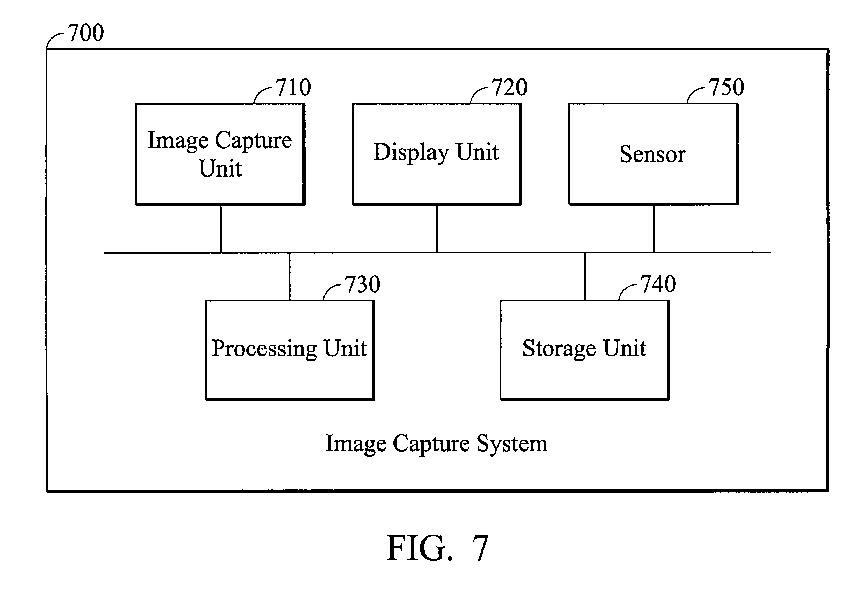

Fig. 7 is a schematic diagram illustrating another embodiment of an image capture system of the invention. The image capture system 100 can be used in an electronic device having image capture capability, such as a digital camera, or a picture-taking handheld device such as a mobile phone, a smart phone, a PDA, and a GPS.

The image capture system 700 comprises an image capture unit 710, a display unit 720, a processing unit 730, a storage unit 740, and at least one sensor 750. The image capture unit 710 may be a CCD or a CMOS, placed at the imaging position for objects inside the electronic device. The display unit 720 can display related figures and interfaces, and related data, such as the preview images continuously captured by the image capture unit 710, and the image captured by the image capture unit 710 during a photography process. It is noted that, the preview image is not actually stored in the storage unit 740. It is understood that, in some embodiments, the display unit 720 may be a screen integrated with a touch-sensitive device (not shown). The touch-sensitive device has a touch-sensitive surface comprising sensors in at least one dimension to detect contact and movement of an input tool, such as a stylus or finger on the touch-sensitive surface. That is, users can directly input related data via the display unit 720. The processing unit 730 can control related components of the image capture system 700, process the preview images continuously captured by the image capture unit 710, and/or the image captured by the image capture unit 710 during the photography process, and perform the image capture methods of the invention, which will be discussed further in the following paragraphs. It is noted that, the image capture system 700 can further comprise a focus unit (not shown in Fig. 7). The processing unit 730 can control the focus unit to perform a focus process for at least one object during a photography process. The image data captured by the image capture unit 710 can be permanently or temporarily stored in the storage unit 140. The storage unit 740 may be a built-in memory, or an external memory card of the image capture system 700. The sensor 750 can detect the movement of the electronic device. The sensor 750 can be used to determine whether the electronic device is stable or not.

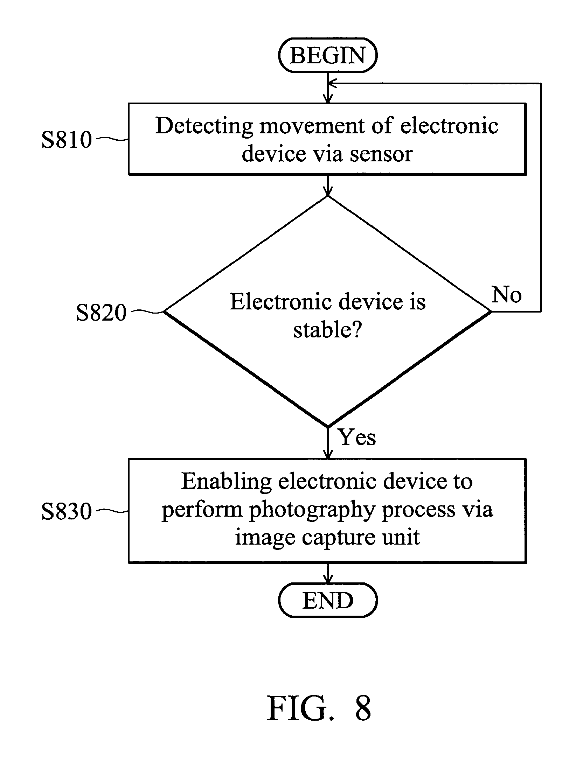

Fig. 8 is a flowchart of another embodiment of an image capture method of the invention. The image capture method can be used in an electronic device having image capture capability, such as a digital camera, or a picture-taking handheld device such as a mobile phone, a smart phone, a PDA, and a GPS.

In step S810, it is determined whether the electronic device is moved or not via the at least one sensor of the electronic device. In step S820, it is determined whether the electronic device is stable or not according to the detection result of the sensor. When the electronic device is not stable (No in step S820), the procedure returns to step S810. When the electronic device is stable (Yes in step S820), in step S830, the electronic device is enabled to perform a photography process to obtain an image via the image capture unit.

Similarly, in some embodiments, a predefined time, such as two or ten seconds can be delayed before the performance of the photography process. After the predefined time, the electronic device performs the photography process via the image capture unit. It is noted that, in some embodiments, the photography process may comprise an auto-focusing process, thus to locate at least one object in the preview image, and set at least one focus point. The photography process can be performed based on the focus point. Further, in addition to the focus process, related exposure and compensation calculations are also required during the photography process. Any focus, exposure and compensation process can be used in the embodiments of the invention.

Therefore, the image capture methods and systems can determine whether to automatically perform a photography process according to an image capturing status which is determined based on at least one preview image and/or a vibration status of an electronic device.

Image capture methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. An image capture method for use in an electronic device, comprising:
capturing at least one preview image via an image capture unit of the electronic device;
determining whether an image capturing status is stable or not according to the preview image; and
when the image capturing status is stable, enabling the electronic device to perform a photography process to obtain an image via the image capture unit.

2. The method of claim 1 further comprising:
receiving an input corresponding to a specific number via an interface;
determining whether the number of objects presented in the preview image equals to the specific number; and
when the number of the objects presented in the preview image equals to the specific number, determining that the image capturing status is stable.

3. The method of claim 1 further comprising:
determining whether the position of an object in a first preview image and the position of the same object in a second preview image are the same; and
when the position of the object in the first preview image and the position of the same object in the second preview image are the same, determining that the image capturing status is stable.

4. The method of claim 3 wherein when the difference between the position of the object in the first preview image and the position of the object in the second preview image is smaller than a predefined tolerance, it is determined that the position of the object in the first preview image and the position of the object in the second preview image are the same.

5. The method of claim 1 further comprising:
receiving an input corresponding to a specific zone via an interface;
determining whether at least one object is presented in the specific zone; and
when at least one object is presented in the specific zone, determining that the image capturing status is stable.

6. The method of claim 1 further comprising:
determining whether the electronic device is stable via at least one sensor of the electronic device; and
when the electronic device is stable, enabling the electronic device to capture the image via the image capture unit.

7. The method of claim 1 further comprising:
waiting for a predefined time; and
after the predefined time, enabling the electronic device to perform the photography process via the image capture unit.

8. The method of claim 1 further comprising:
performing an auto-focusing process to set at least one focus point according to at least one object in the at least one preview image; and
performing the photography process based on the focus point.

9. The method of claim 8 further comprising:
obtaining the size of each object in the preview image;
determining whether the size of a specific object is greater than a predefined ratio of the size of the other objects; and
when the size of the specific object is greater than the predefined ratio of the size of the other objects, setting the specific object as the focus point.

10. The method of claim 9 wherein when the size of each object is similar, the object which is closest to the center of the preview image is set as the focus point.

11. An image capture system for use in an electronic device, comprising:
an image capture unit capturing at least one preview image; and
a processing unit determining whether an image capturing status is stable or not according to the preview image, and when the image capturing status is stable, enabling the electronic device to perform a photography process to obtain an image via the image capture unit.

12. The system of claim 11 wherein the processing unit further receives an input corresponding to a specific number via an interface, determines whether the number of objects presented in the preview image equals to the specific number, and when the number of the objects presented in the preview image equals to the specific number, determines that the image capturing status is stable.

13. The system of claim 11 wherein the at least one preview image comprises a first preview image and a second preview image, and the processing unit further determines whether the position of an object in the first preview image and the position of the same object in the second preview image are the same, and when the position of the object in the first preview image and the position of the same object in the second preview image are the same, the processing unit determines that the image capturing status is stable.

14. The system of claim 13 wherein when the difference between the position of the object in the first preview image and the position of the object in the second preview image is smaller than a predefined tolerance, the processing unit determines that the position of the object in the first preview image and the position of the object in the second preview image are the same.

15. The system of claim 11 wherein the processing unit further receives an input corresponding to a specific zone via an interface, determines whether at least one object is presented in the specific zone, and when at least one object is presented in the specific zone, determines that the image capturing status is stable.

16. The system of claim 11 wherein the processing unit further determines whether the electronic device is stable via at least one sensor, and when the electronic device is stable, enables the image capture unit to capture the image.
